# EUROPEAN PATENT APPLICATION

(11) **EP 2 735 415 A1**
(43) Date of publication of application: **28.05.2014**
(21) Application number: 12814289.0
(22) Date of filing: 11.07.2012
(51) Int. Cl.: B29C 39/22, B29C 39/10, B29C 39/42, B29C 43/12, B29C 43/34, B29C 43/56, B29K 105/08, B29L 31/30

(54) **COMPOSITE MATERIAL OF FIBER-REINFORCED RESIN AND WEIGHT-SAVING CORE, AND METHOD AND APPARATUS FOR PRODUCING SAME**

(30) Priority: 21.07.2011 JP 2011159882
(71) Applicant: Mitsubishi Heavy Industries, Ltd., Tokyo 108-8215 (JP)
(72) Inventor: HATTORI, Hidetaka, Tokyo 108-8215 (JP); WATANABE, Akihisa, Tokyo 108-8215 (JP); HAYASHI, Noriya, Tokyo 108-8215 (JP)
(74) Representative: Henkel, Breuer & Partner
(86) International application number: PCT/JP2012/067663
(87) International publication number: WO 2013/011884

(57) **Abstract**

In cases where a composite material, which is provided with a fiber-reinforced resin and a weight-saving core adjacent to the fiber-reinforced resin, is produced, the composite material is produced with high molding accuracy at high rate without increasing the weight of the composite material, while preventing the resin from flowing into pores in the surface of the weight-saving core. In order to produce a composite material which is provided with a weight-saving core and a fiber-reinforced resin that is adjacent to at least a part of the surface of the weight-saving core, the following steps are carried out: a step (100) wherein a core, which is provided with a part having a shape that is substantially the same as a part of a weight-saving core adjacent to a fiber-reinforced resin, and a fiber base to be arranged adjacent to the core are disposed within a mold; a step (110) wherein a resin material is poured into the mold, so that the fiber base is impregnated with the resin material; a step (120) wherein the resin material is cured; a step (130) wherein the core and the cured resin containing the fiber base are taken out of the mold; and a step (150) wherein the cured resin containing the fiber base and the weight-saving core are integrated with each other.

## Description

### TECHNICAL FIELD

The present invention relates to a composite material including a fiber reinforced resin and a lightweight core provided adjacent thereto, and to a production method and to a production device therefor.

### BACKGROUND ART

It is required for structural members used for aircraft, and the like to have a high strength and be light in weight. For example, a honeycomb sandwich panel is used in secondary structure members, such as a control surface and a fairing of aircraft. A honeycomb sandwich panel is a panel in which a surface layer of a panel is constituted by a fiber reinforced resin and a core layer of the panel includes a honeycomb material so that the weight of the panel can be reduced.

Japanese Patent Application Publication No. 2000-167950 discloses a conventional method for producing a honeycomb sandwich panel, in which an adhesive is applied between a prepreg and a honeycomb core by hand lay-up to laminate the prepreg and the honeycomb core together; the laminated prepreg and the honeycomb core are packed inside a vacuum bag; the inner space of the vacuum bag is evacuated; and the bag including the prepreg and the honeycomb core is pressed and heated by hot press or autoclave.

In addition, Japanese Patent Application Publication No. 2000-167950 discloses a honeycomb sandwich panel production method as an improvement of the above-described conventional method, in which dry fabric is laminated onto respective surfaces of a honeycomb core via a thermosetting sealant having a bonding function; the sealant and the dry fabric are heated at a curing temperature for the sealant to primarily cure the sealant and dry out the dry fabric; the dried dry fabric is impregnated with a thermosetting resin; and pressure and heat is applied to the entire portion thereof under a predetermined condition to cure the resin impregnated into the dry fabric. A method like this, in which a resin is injected and impregnated into a fiber base material previously arranged in a molding tool to form a fiber reinforced resin, is referred to as a resin transfer molding (RTM) method.

### CITATION LIST

### PATENT LITERATURE

Patent Literature 1: Japanese Patent Application Publication No. 2000-167950

### SUMMARY OF INVENTION

### TECHNICAL PROBLEM

As a lightweight core for reducing the weight of a structural member, a foam resin member is used as well as the above-mentioned honeycomb material, and numerous holes are formed on the surface and in the inside of the lightweight core like this to reduce the weight of the core. In the RTM method, in forming a composite material including a fiber reinforced resin adjacent to the surface of the lightweight core, it is necessary to prevent the injected resin from flowing into the surface holes. This is because there is a problem such that if the resin flows into the holes of the lightweight core, the weight of the composite material to be molded may be increased; the fiber base material may meander; the external appearance of the composite material may degrade; and even the strength of the composite material may be reduced in some cases.

Thus, in the RTM method discussed in Japanese Patent Application Publication No. 2000-167950, a thermosetting sealant having a bonding function is provided respectively on both surfaces of the lightweight core; the sealant is heated up to a resin impregnation temperature to primarily cure the same; and then a resin is injected into a fiber base material to impregnate the fiber base material with the resin, and thus the inflow of the resin into the holes of the lightweight core is prevented by means of the primarily cured sealant. However, in this conventional method, a problem may arise in that the weight of the composite material increases by an amount equivalent to the weight of the sealant because the surface of the lightweight core is sealed with the sealant, which is primarily unnecessary for the composite material. Furthermore, if the tightness of the bonding between the lightweight core and the sealant is insufficiently high, the resin may flow into some of the holes of the lightweight core. There is a problem in that a defect like this cannot be detected before an inspection performed after the composite material is complete, and such a defective product must therefore be discarded.

On the other hand, in the method for producing a composite material using a prepreg, although no such problem of resins flowing into the surface holes of the lightweight core may occur, in contrast to the case of the RTM method, another problem may arise such that minute recesses are formed on the surface of the prepreg which cures at the same time as the adhesion to the lightweight core, which may cause the external appearance of the composite material to degrade, and in some cases, even the strength of the composite material to degrade. In addition, as an alternative to this method, another method may be used in which a prepreg is cured before bonding it to the lightweight core. However, there is a problem in that a high technique may be required to appropriately fit the cured fiber reinforced resin onto the lightweight core. In addition, there is yet another problem in that in some cases, the adhesion force between the fiber reinforced resin and the lightweight core may become low.

Moreover, there is still another problem in the composite material production method using a prepreg, in that because curing of a prepreg takes a long time, it is difficult to respond to the needs of production at a high production rate. Furthermore, the operation cost for the autoclave (costs for use of power and nitrogen gas) becomes high; the autoclave itself is very expensive; and a large space is required for installing the autoclave apparatus. Therefore, there is a problem such in it is difficult to dispose multiple autoclaves in a factory.

Thus, in consideration of the above problems, one purpose of the invention is to provide a method for producing a composite material including a fiber reinforced resin and a lightweight core provided adjacent thereto, which is capable of preventing inflow of a resin into holes formed on a surface of the lightweight core without an increase in the weight of the composite material and also capable of producing the composite material with a high molding accuracy and at a high production rate. In addition, another purpose of the invention is to provide a production device used for the production method described above, and yet another purpose of the invention is to provide a composite material produced by the above-described production method.

### SOLUTION TO PROBLEM

In order to achieve the above-described purposes, according to an aspect of the invention, a method for producing a composite material including a lightweight core and a fiber reinforced resin which is adjacent to at least a part of a surface of the lightweight core includes the steps of: arranging a foundry core and a fiber base material adjacently to the foundry core in an inside of a molding tool, the foundry core including a part which has a shape substantially the same as a shape of a part of the lightweight core which is adjacent to the fiber reinforced resin; impregnating the fiber base material with a resin material by injecting the resin material into the molding tool; curing the resin material; separating a cured resin including the fiber base material molded by the molding tool from the foundry core; and forming the composite material by combining the lightweight core with the cured resin including the fiber base material.

A chain-curing resin composition may be used for the resin material. In addition, in the curing step, the resin material may be cured to reach a handleable state by inducing a chain cure reaction of the chain-curing resin composition.

In the curing step, the resin material may be cured by means of heat, ultraviolet rays, or both thereof. In addition, a nonadiabatic molding tool may be used for the molding tool.

The lightweight core and the fiber reinforced resin may be provided adjacently to each other either directly or via an adhesive in the composite material of the invention. When the lightweight core and the fiber reinforced resin is provided adjacently to each other via an adhesive, the adhesive can be arranged, in the composite material forming step, between the lightweight core and the cured resin including the fiber base material.

In the composite material forming step, the lightweight core may be combined with the cured resin including the fiber base material at a location which the part of the foundry core having substantially the same shape as the lightweight core was positioned when the foundry core was arranged.

In the composite material forming step, the lightweight core and the cured resin including the fiber base material may be arranged inside the molding tool to combine them with each other. Alternatively, in the composite material forming step, the lightweight core and the cured resin including the fiber base material may be enclosed in a bag and then the resulting bag may be heated to combine them with each other.

In the composite material forming step, the combination may be carried out by heating until at least a glass transition temperature of the cured resin including the fiber base material.

According to another aspect of the invention, a device for producing a composite material including a lightweight core and a fiber reinforced resin which is adjacent to at least a part of a surface of the lightweight core, includes: a molding tool configured to form the fiber reinforced resin by injecting a resin material in a cavity thereof in which a fiber base material is arranged and by curing the resin material after the fiber base material is impregnated with the resin material, and a foundry core including a part which has a shape substantially the same as a shape of a part of the lightweight core which is adjacent to the fiber reinforced resin.

The foundry core may be arranged inside the molding tool so that the part of the foundry core having substantially the same shape as the lightweight core is positioned at a location of the lightweight core included in the composite material.

According to yet another aspect of the invention, a composite material includes: a lightweight core; and a fiber reinforced resin which is adjacent to at least a part of a surface of the lightweight core, the fiber reinforced resin being a cured resin including a fiber base material which is obtained by arranging a foundry core and a fiber base material adjacently to the foundry core in an inside of a molding tool, the foundry core including a part which has a shape substantially the same as a shape of a part of the lightweight core which is adjacent to the fiber reinforced resin; injecting a resin material into the molding tool to impregnate the fiber base material with the resin material; curing the resin material; and separating the cured resin including the fiber base material from the foundry core; and the composite material being obtained by combining the lightweight core with the cured resin including the fiber base material. The resin material may be a chain-curing resin composition.

### ADVANTAGEOUS EFFECT OF INVENTION

According to the invention, a foundry core including a part which has a shape substantially the same as a shape of a part of the lightweight core which is adjacent to the frame is arranged inside a molding tool for molding a composite material; a resin material is injected; a fiber base material is impregnated with the resin material; the resin material is cured and the fiber reinforced resin is molded; then the foundry core and the fiber reinforced resin are separated from each other; and next, the lightweight core is integrated with the fiber reinforced resin to form a composite material, which thereby enables prevention of inflow of a resin into holes on a surface of the lightweight core without increasing the weight of the composite material and also enables production of a composite material with a high molding accuracy and at a high production rate.

### BRIEF DESCRIPTION OF DRAWINGS

[Figure 1] Figure 1 is a flow chart showing an embodiment of a method for producing a composite material of a fiber reinforced resin and a lightweight core according to the invention.
[Figure 2] Figure 2 is a cross-sectional view schematically showing an embodiment of a device for producing a composite material of a fiber reinforced resin and a lightweight core according to the invention, which is used for the production method shown in Figure 1.
[Figure 3] Figure 3 is an enlarged cross-sectional view schematically showing an example of a method for fixing a first foundry core onto an upper mold of the production device illustrated in Figure 2.
[Figure 4] Figure 4 is an enlarged cross section schematically illustrating an example of a method for fixing the first foundry core onto the upper mold of the production device illustrated in Figure 2.
[Figure 5] Figure 5 is an enlarged cross section schematically illustrating an example of a method for fixing the first foundry core onto the upper mold of the production device illustrated in Figure 2.
[Figure 6] Figure 6 is a cross section schematically illustrating a state of use of the production device illustrated in Figure 2 in step 130 of the production method illustrated in Figure 1.
[Figure 7] Figure 7 is a cross section schematically illustrating a state of use of the production device illustrated in Figure 2 in step 140 of the production method illustrated in Figure 1.
[Figure 8] Figure 8 is a cross section schematically illustrating a state of use of the production device illustrated in Figure 2 in step 160 of the production method illustrated in Figure 1.
[Figure 9] Figure 9 is a cross section which schematically illustrates another embodiment of a device according to the invention, which is used for the production method illustrated in Figure 1 and configured to produce a composite material of a fiber reinforced resin and a lightweight core.
[Figure 10] Figure 10 is a cross section schematically illustrating step 160 of the production method illustrated in Figure 1, which is performed by using the fiber reinforced resin produced by the production device illustrated in Figure 9.
[Figure 11] Figure 11 is a cross section which schematically illustrates yet another embodiment of a device according to the invention, which is used for the production method illustrated in Figure 1 and configured to produce a composite material of a fiber reinforced resin and a lightweight core.
[Figure 12] Figure 12 is a cross section schematically illustrating step 160 of the production method illustrated in Figure 1, which is performed by using the fiber reinforced resin produced by the production device illustrated in Figure 9 or 11.

### DESCRIPTION OF EMBODIMENTS

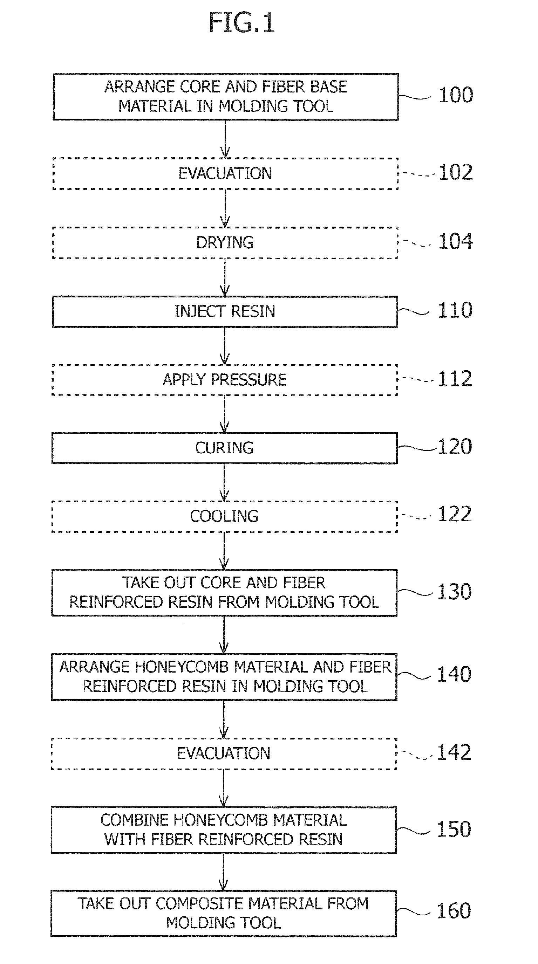

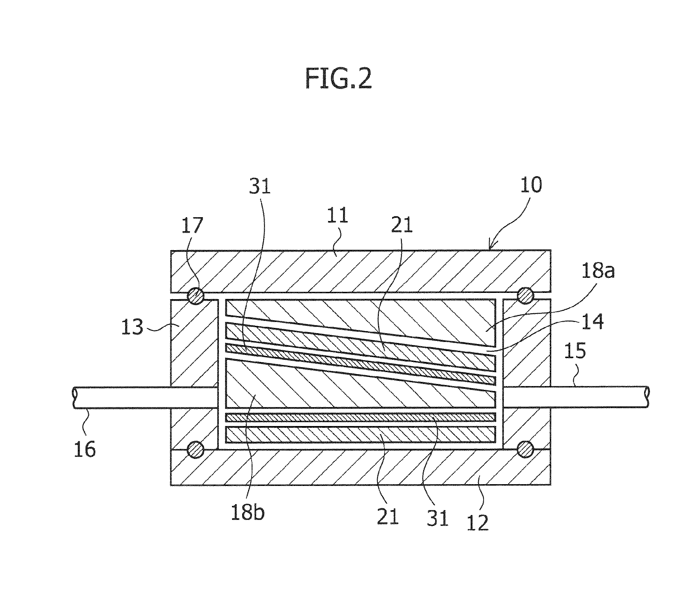

Embodiments of the present invention will be described below with reference to the attached drawings. As shown in Figure 1, step 100 for arranging a foundry core and a fiber base material in a molding tool is firstly carried out in the present embodiment. As shown in Figure 2, a molding tool 10 includes an upper mold 11, a lower mold 12, a frame mold 13, and a first foundry core 18a. A cavity 14, which has an inner shape for forming the shape of a composite material to be molded, is formed by these molds. The molding tool 10 also includes resin injection piping 15 for injecting a resin material into the cavity 14 and vacuum piping 16 for evacuating the inside of the cavity 14. Between the upper mold 11, the lower mold 12, and the frame mold 13, sealers 17 for sealing the mating surfaces thereof are placed.

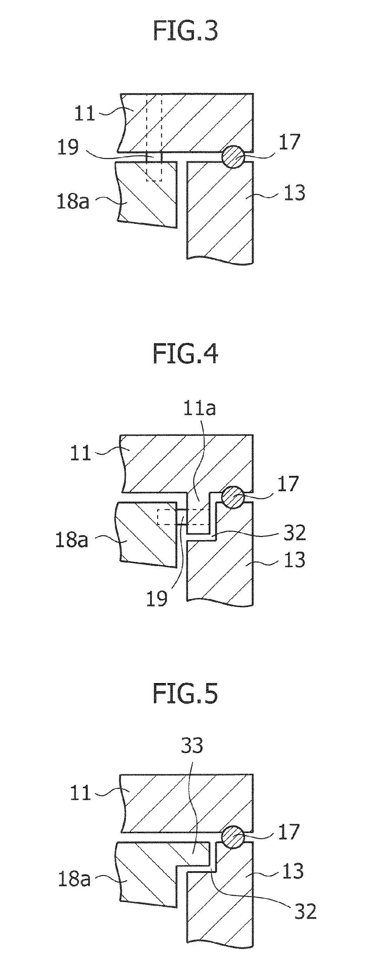

The first foundry core 18a is positioned adjacently to the upper mold 11 to form a mold surface of the composite material to be molded. It is preferable if the first foundry core 18a is fixed to the upper mold 11. Alternatively, it is preferable if the first foundry core 18a is integrated with the upper mold 11. As a method for fixing the first foundry core 18a to the upper mold 11, join surfaces of the first foundry core 18a and the upper mold 11 may be directly joined together with bolts or pins 19, for example, as illustrated in Figure 3. Alternatively, as shown in Figure 4, a recess 32 may be disposed on the upper end of the inner surface of the frame mold 13. A projection 11a, which engages the recess 32, may be disposed on the inner surface of the upper mold 11. The projection 11a of the upper mold and the outer edge of the first foundry core 18a and may be joined together with the bolts or pins 19. Furthermore, alternatively, the first foundry core 18a may be fixed to the frame mold 13. For example, as shown in Figure 5, a projection 33, which is configured to engage the recess 32 disposed on the upper end of the inner surface of the frame mold 13, may be disposed on the outer edge of the first foundry core 18a. Thus, the first foundry core 18a can be fixed to the frame mold 13.

In addition, the molding tool 10 is provided with a second foundry core 18b, which has a shape substantially identical to a shape of a portion of a lightweight core which is adjacent to a fiber reinforced resin in the composite material to be molded. The second foundry core 18b is arranged in the cavity 14 at a location corresponding to the lightweight core included in the composite material to be molded. The second foundry core 18b is fixed at a predetermined location due to the configuration of the frame mold 13 or by using jigs, or the like, although not particularly illustrated in the drawing.

Materials commonly used as mold materials can be used for the upper mold 11, the lower mold 12, the frame mold 13, and the first and the second foundry cores 18. Examples of such materials include metals, such as aluminum, aluminum alloys, iron, and alloy steel such as stainless steel or invar; fiber reinforced resins; and glass. In addition, these materials can be constituted by adiabatic materials instead of the above-described nonadiabatic ones. The adiabatic material is not limited to a specific one; however, it is preferable to use a material of which the thermal conductivity is 0.3 W/(m·K) or lower; more preferably one with the thermal conductivity of 0.2 W/(m·K) or lower; and most preferably one with the thermal conductivity of 0.1 W/(m·K) or lower. Furthermore, it is preferable to use a material with a low volumetric specific heat for the material. For example, a material with a volumetric specific heat equal to or lower than that of aluminum is preferable. In addition, it is preferable to use a material with a small heat capacity for the material. For example, a material with a heat capacity equal to or smaller than that of aluminum is preferable. For example, a material constituted by a heat resisting surface made of a polymer film and an inside made of foam can be used.

In addition, inside the cavity 14, a fiber base material 21 is provided at a location of the fiber reinforced resin of the composite material to be molded. For the fiber base material 21, a wide variety of fibers for fiber reinforced resins, such as glass fibers, carbon fibers, and aramid fibers, can be used. Jigs and parts, such as nuts, and the like, can be attached to the fiber base material 21 where necessary. The foundry core and the molding tool contacting the fiber base material 21 may be provided with a structure for fixing the fiber base material 21 at a predetermined location where necessary. For example, in Figure 2, the first foundry core 18a, the second foundry core 18b, the lower mold 12, or the frame mold 13 may be provided with such a structure.

A release agent such as a peel ply 31 may be provided between the first and the second foundry cores 18 and the fiber base material 21, where necessary. Alternatively, the surface of the first and the second foundry cores 18 may be treated by releasing treatment. Further alternatively, the first and the second foundry cores 18 may be constituted by a mold release material. After placing the fiber base material 21 inside the molding tool 10 together with the second foundry core 18b, the upper mold 11 to which the first foundry core 18a is fixed, the lower mold 12, and the frame mold 13 are closed. After closing the molds, the molding tool 10, sandwiched by hot press plates (not shown) placed outside the upper mold 11 and the lower mold 12, is pressed from outside the molding tool 10 where necessary.

Next, step 110 for injecting the resin material into the cavity is carried out, as shown in Figure 1. Step 102 for evacuating the inside of the molding tool is carried out before the resin injection step, where necessary. In this step, the cavity 14 is evacuated by using a vacuum pump (not shown) and the like through the vacuum piping 16 as illustrated in Figure 2. It is particularly preferable to evacuate the inside of the cavity 14 until it reaches a vacuum state. In addition, the molding tool 10 may be warmed where necessary. If the molding tool 10 is to be warmed, it is warmed up to a predetermined temperature, such as an impregnation temperature or a drying temperature.

Furthermore, step 104 for drying the fiber base material inside the molding tool is performed as shown in Figure 1 where necessary. The drying can be implemented by heating the molding tool 10 by means of the hot press (not shown) placed outside the upper mold 11 and the lower mold 12, for example. The molding tool 10 may be heated up to the impregnation temperature for the resin material where necessary. Alternatively to the configuration illustrated in Figure in which the drying step 104 is performed after the evacuation step 102, the evacuation step 102 may be performed after the drying step 104.

In the resin injection step 110, the resin material is injected into the cavity 14 from a resin tank (not shown) via the resin injection piping 15 as illustrated in Figure 2. The resin material may be preheated before its injection where necessary. The resin material flows inside the molding tool 10 via a resin flow path between the first foundry core 18a and the lower mold 12 and the fiber base material 21 and via a resin flow path between the second foundry core 18b and the fiber base material 21 to fill up the inside of the cavity 14. The upper mold 11, the lower mold 12, and the first and the second foundry cores 18 may be respectively provided with resin flow paths, in which the resin material flows, where necessary.

The resin material injected into the cavity 14 then impregnates into the fiber base material 21. In this process, the resin tank is pressurized where necessary. By applying pressure to the resin tank, the impregnation of the resin material can be promoted. Furthermore, after the inside of the cavity 14 is filled up with the resin material, the vacuum piping 16 may be closed and the pressure inside the cavity 14 may be increased with the pressure from the resin injection piping 15 (step 112 illustrated in Figure 1), where necessary. The pressure may be increased preferably by 3 atmospheres or more, more preferably by 5 atmospheres or more, and most preferably by 10 atmospheres or more. The level of pressure inside the cavity 14 is not limited by a specific upper limit; however, a pressure of 100 atmospheres or less is preferable. After the fiber base material 21 is impregnated with the resin material, the molding tool 10 may be further clamped by using the hot pressure plate (not shown) where necessary.

After the resin injection step, step 120 for curing the injected resin material is carried out. The curing is carried out by applying heat, ultraviolet (UV) rays, or both to the resin material, depending on the characteristic of the resin material to be used. The application of heat can be implemented by using the above-mentioned hot pressure plate (not shown) or the like, a heater (not shown) incorporated to the molding tool 10, etc., for example. The irradiation of the UV rays can be implemented by using a UV lamp (not shown).

The resin material is not limited to a material of a specific type. However, it is preferable to use a chain-curing resin composition. A "chain-curing resin composition" is a resin with characteristics such that its curing starts when heat is applied thereto or when it is irradiated with energy rays such as UV rays or the like; that cure reaction heat is generated in the process of curing, a cure reaction progresses as a chain reaction due to the generated cure reaction heat, and thus the cure reaction heat is serially generated; and that the cure reaction progresses as a chain reaction due to self-generated heat generated during the cure reaction without being irradiated with energy rays and regardless of whether an energy-ray shielding substance is present or not in a composition (Japanese Patent Application Publication No. 11-193322, Japanese Patent No. 3950241, and Japanese Patent No. 3944217).

For the chain-curing resin composition like this, a resin composition can be used, which is produced by mixing a photopolymerization resin component, such as a photopolymerization oligomer, a photopolymerization monomer, and the like, and a polymerization starter component composed of binary or higher polymers constituted by a photopolymerization starter and a photothermal polymerization starter for starting both photopolymerization and thermal polymerization, for example. For the photopolymerization resin component, a cationic resin is preferable; an epoxy resin is more preferable; and a cycloaliphatic epoxy resin, a glycidyl ether type epoxy resin, and an epoxidized polyolefin resin are yet more preferable. For the photopolymerization starter, a diazonium salt, an iodonium salt, a pyridinium salt, a phosphonium salt, a sulfonium salt, an iron-allene compound, and a sulfonate are preferable. For the photothermal polymerization starter, an aryl-based sulfonium salt is preferable. It is preferable if 0.5 to 6.0 parts by weight of the polymerization starter component is included for 100 parts by weight of the photopolymerization resin component. It is preferable if the weight ratio of the photothermal polymerization starter to the photopolymerization starter is the range of 1 to 4.

In addition, for the chain-curing resin composition, a resin composition, which is produced by mixing a photopolymerization resin component with a photopolymerization starter component and a curing agent component used in cold-setting or hot-setting a photopolymerization resin component, for example, can be used (Japanese Patent Application Publication No. 2001-89639, Japanese Patent No. 4108094, and Japanese Patent No. 4241721). In this resin composition, an epoxy resin with a cyclic ether structure as its molecular structure is preferable as the photopolymerization resin component. For the photopolymerization starter component, an iron-allene-based compound and a sulfonium salt are preferable. For the curing agent component, an acid anhydride is preferable. It is preferable if the curing agent component is mixed with the photopolymerization resin component at the ratio of 0.1 to 1.4 mol of the curing agent component to 1 mol of the photopolymerization resin component. In addition, it is preferable if the components of the resin composition other than the photopolymerization starter component are mixed with the photopolymerization starter component at the ratio of the total weight of 100 parts by weight of such other components to 0.1 to 6.0 parts by weight of the photopolymerization starter component.

Furthermore, for the chain-curing resin composition, a resin composition including a cycloaliphatic epoxy having two cyclohexane oxides in a molecule and a denatured bisphenol A-type epoxy resin and of which the content of the cycloaliphatic epoxy is 25 to 90% by mass when the total amount of the above-described two components is taken as 100% by mass, for example, can be used, and a resin composition including a cycloaliphatic epoxy having two cyclohexane oxides in a molecule, a denatured bisphenol A-type epoxy resin, and a liquid bisphenol A type epoxy resin and of which the content of the cycloaliphatic epoxy is 25 to 90% by mass when the total amount of the above-described three components is taken as 100% by mass, for example, can be used (Japanese Patent Application Publication No. 2011-079989).

By using the chain-curing resin composition like this, heat and energy such as UV rays are applied to induce a chain cure reaction, and thereby the resin material in the molding tool 10 can be cured. Even if the foundry core 18 has a shape with which it becomes difficult to apply curing energy uniformly to the entire resin material, the curing of the entire resin material can be completed in a short period of time because during the chain cure reaction, the cure reaction progresses as a chain reaction due to the self-generated heat. With respect to the cure time, although it varies according to the dimension of the material to be molded, the thickness of the plate, the type of the resin, and the like, it takes about one to ten minutes from the start of the chain curing to the completion of the curing in the case of a common carbon-fiber-reinforced plastic (CFRP) which is about 1 m long and wide and about 2 mm thick, for example. In performing the curing, the resin material may be cured to reach its handleable state. For example, if the cured resin material including the fiber base material is in a state in which the resin material maintains its shape at room temperature, the resin material is in a handleable state. When the chain cure reaction is complete, the chain-curing resin composition is cured to reach the handleable state described above.

The temperature set when heat is used in the curing step 120 is different according to the composition of the resin material and a catalyst to be used. More specifically, the temperature of 80 to 250°C is preferable, the temperature of 110°C or higher is more preferable, and the temperature of 150°C or higher is yet more preferable. In addition, by using a nonadiabatic material for the molding tool 10 (including the foundry core 18), the temperature of the resin material for its curing can be easily controlled.

For the resin material, a curable resin and a thermoplastic resin can be used as well as a chain-curing resin composition. For the curable resin, an epoxy resin, a phenol resin, a bismaleimide resin, a polyimide resin, an unsaturated polyester resin, a benzoxazine resin, and the like, for example, can be used. If the curable resin is to be heated in the curing step 120, the temperature of the heat to be applied is preferably in the range of 100 to 350°C, although this may be differently determined according to the composition of the curable resin. For the thermoplastic resin, a poly(phenylene sulfide) (PPS) resin, a poly(etheretherketone) (PEEK) resin, a polyetherketoneketone (PEKK) resin, a polyetherketone (PEK) resin, a polyimide (PI) resin, a polyetherimide (PEI) resin, a polyamide (PA), and the like can be used, for example.

The curing in the curing step 120 includes semi-curing. Hereinbelow, the term "semi-curing" refers to the state of curing in which the resin material has been solidified but the crosslinking reaction has not been complete yet, in which state the resin material has been cured and reached its handleable state. Of course, in this curing step 120, the resin material may be completely cured.

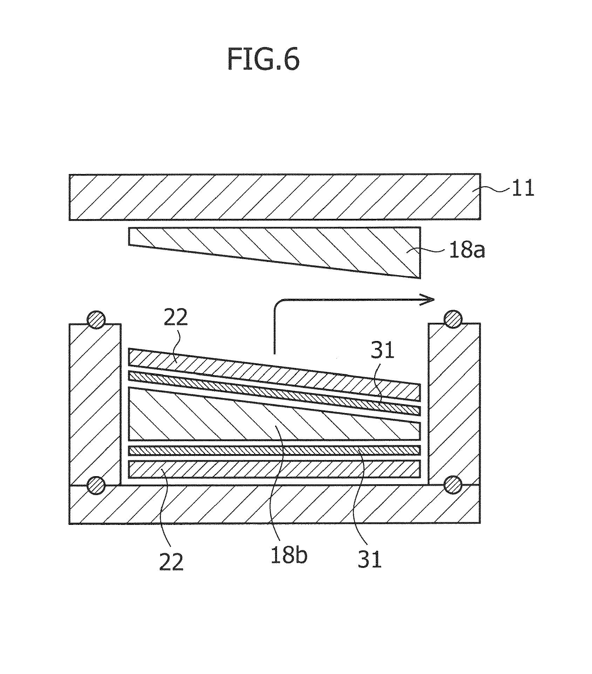

After the curing step 120, step 130 for taking out the foundry cores and the fiber reinforced resin from the molding tool is carried out, as shown in Figure 1. As illustrated in Figure 6, the upper mold 11 and the first foundry core 18a are released, the molding tool 10 is opened, and the cured resin including the fiber base material molded by the molding tool 10, i.e., a fiber reinforced resin 22, and the second foundry core 18b are taken out. Furthermore, the fiber reinforced resin 22 and the second foundry core 18b are separated from each other. If the peel ply 31 is arranged between the fiber reinforced resin 22 and the second foundry core 18b, the peel ply 31 is separated therefrom.

Before the take-out step 130, step 122 for cooling the molding tool 10 is carried out where necessary. For the cooling, a cooling equipment such as a water cooling equipment (not shown), for example, can be used. By cooling the molding tool 10, the handling of the molding tool 10 and the taking out of the second foundry core 18b and the fiber reinforced resin 22 from the molding tool 10 can be safely and easily performed.

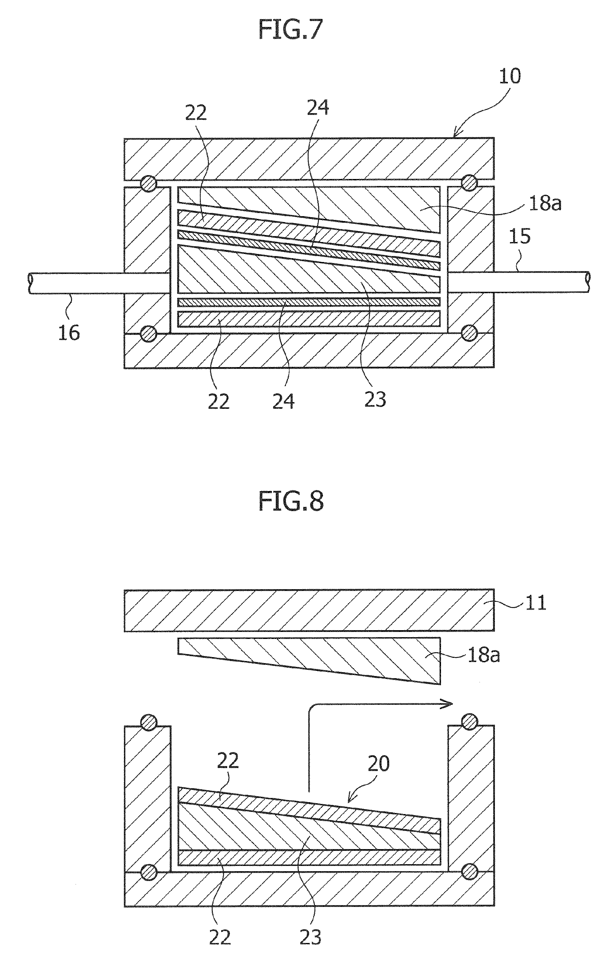

After the fiber reinforced resin is separated, step 140 for placing a honeycomb material and the fiber reinforced resin into the molding tool is carried out. Referring to Figure 7, a honeycomb material 23 is provided at the location inside the molding tool 10 at which the second foundry core is placed and the fiber reinforced resin 22 is provided at the location at which the fiber base material is placed. Thus, in the take-out step 130, alternatively in some cases, the honeycomb material 23 can be provided on the fiber reinforced resin 22 without taking out the fiber reinforced resin 22 from the lower mold 12. The lightweight core is not limited to the honeycomb material 23. In other words, any lightweight core capable of reducing the weight of the composite to be molded can be used. For example, a foam resin member such as ROHACELL^{®} can be used. A film adhesive 24 may be provided between the honeycomb material 23 and the fiber reinforced resin 22, where necessary. For the adhesive 24, an epoxy resin-based adhesive and the like can be used. In addition, for the adhesive 24, the same resin composition as that used for the resin material can be used. For example, the above-described chain-curing resin composition may be used.

After the honeycomb material 23 and the fiber reinforced resin 22 are placed in the molding tool 10, the upper mold 11 including the first foundry core 18a, the lower mold 12, and the frame modes 13 are closed. After the molds are closed, the molding tool 10 is sandwiched by the hot press plates (not shown) placed outside the upper mold 11 and the lower mold 12 to press the molding tool 10 from the outside thereof.

After placing the honeycomb material and the fiber reinforced resin, step 142 for evacuating the inside of the molding tool is carried out as shown in Figure 1, where necessary. The evacuation can be implemented by decompressing the inside of the molding tool 10 by means of the vacuum piping 16 until it reaches a vacuum state as described above in the description of the evaluation step 102.

Next, step 150 for combining the honeycomb material with the fiber reinforced resin is carried out. Referring to Figure 7, because the fiber reinforced resin 22 has been already cured in the curing step 120, the inflow of the resin into the holes on the surface of the honeycomb material 23 can be prevented even if the fiber reinforced resin 22 has come into a direct contact and been integrated with the honeycomb material 23.

The combination can be implemented by applying heat to the molding tool 10 with the hot press plates (not shown) placed outside the upper mold 11 and the lower mold 12 and a heater (not shown) incorporated in the molding tool 10, for example. If the fiber reinforced resin 22 is in the semi-cured state, the honeycomb material 23 and the fiber reinforced resin 22 can be adhered and integrated together by heating the fiber reinforced resin 22 until it is completely cured. For example, if the adhesive 24 is used and if it is a thermosetting adhesive, the honeycomb material 23 and the fiber reinforced resin 22 can be adhered and integrated together by heating the adhesive up to the curing temperature for the adhesive or higher. In addition, by performing this heating, the post-curing of the fiber reinforced resin 22 in the semi-cured state and the curing of the adhesive can be performed at the same time, which thus enables improvement of the quality of adhesion and reduction of the production time. If the adhesive 24 is not a thermosetting adhesive, the honeycomb material 23 and the fiber reinforced resin 22 can be adhered and integrated together without particularly heating the adhesive 24.

In addition, by heating the molding tool 10 in the combination step 150, the accuracy of integration of a composite material 20 can be further improved. Particularly if the fiber reinforced resin 22 in the semi-cured state is used, the accuracy of integration of the composite material 20 can be improved. The heating temperature in the combination step 150 is preferably a glass transition temperature for the fiber reinforced resin 22 or higher. By heating the molding tool 10 up to the glass transition temperature for the fiber reinforced resin 22 or higher, the resin component of the fiber reinforced resin 22 softens, thereby the surface of the fiber reinforced resin 22 deforms along with the shape of the honeycomb material 23, and thus the accuracy of molding of the composite material can be improved. In this regard, for the fiber reinforced resin 22 in the semi-cured state, it is preferable to use a resin composition for which the glass transition temperature is preferably in the range of 80 to 200°C and more preferably in the range of 80 to 150°C.

Then step 160 for taking out the composite material from the molding tool is carried out as shown in Figure 1. Referring to Figure 8, the upper mold 11 and the first foundry core 18a are opened and the composite material 20, which has a three-layer structure including a core layer of the honeycomb material 23 and the two-layered fiber reinforced resins 22, which sandwich the honeycomb material 23 from both sides thereof, is taken out from the molding tool 10. Because the composite material 20 includes the adhesive 24 only where necessary in addition to the fiber reinforced resin 22 and the honeycomb material 23, the weight of the composite material does not increase. In addition, because the fiber reinforced resin 22 is molded with the molding tool 10 for molding the composite material in steps 100 to 130, the fiber reinforced resin 22 has stable dimensions, the fiber reinforced resin 22 can thus be easily fitted with the honeycomb material 23, and thereby the composite material 20 with a high molding accuracy can be obtained. Furthermore, by employing the RTM method described above, the composite material can be produced at a higher production rate compared with the case of using a molding method which uses a prepreg.

In the present embodiment shown in Figures 1 to 8, an example is described in which the composite material 20, which has a three-layer structure including the honeycomb material 23 and two pieces of fiber reinforced resins 22 that sandwich the honeycomb material 23 from both sides thereof, is produced. However, the present invention is not limited to this. For example, according to the present invention, a composite material with a two-layer structure, in which one piece of fiber reinforced resin is provided adjacently to one surface of a honeycomb material, can be produced. In addition, according to the present invention, a composite material having a multi-layer structure in which the entire periphery of a honeycomb material is covered with a fiber reinforced resin can be produced.

Moreover, in the present embodiment, the composite material 20 is produced by using the second foundry core 18b having an entire shape substantially the same as the shape of the honeycomb material 23. However, the present invention is not limited to this. For example, according to the present invention, a composite material can be produced by using a foundry core that includes a part having a shape substantially the same as the shape of a honeycomb material. In this case, the honeycomb material is arranged at a location of the part having the shape substantially the same as the shape of the honeycomb material, among the locations at which the foundry cores are arranged, and hollow members and solid members are arranged in the other parts of the foundry core. Thus, a composite material including a honeycomb material, hollow or solid members, and a fiber reinforced resin provided adjacently thereto can be obtained.

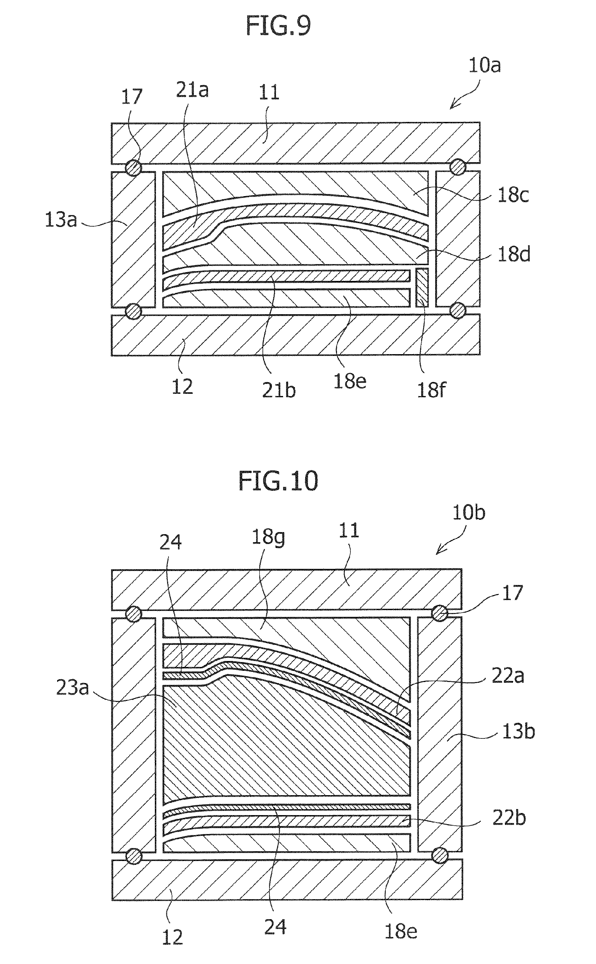

In addition, a composite material can also be produced by using a foundry core which includes a part having a shape substantially the same as the shape of the part of the honeycomb material which is adjacent to the fiber reinforced resin, for example. In this case, referring to Figures 9 and 10, the composite material molded by a molding tool 10b includes a thick honeycomb material 23a. On the other hand, for a molding tool 10a for molding fiber reinforced resins 22a and 22b included in the composite material, a second foundry core 18d is thinner than the honeycomb material 23a while maintaining the shape of the surface of the second foundry core 18d substantially the same as the shape of a part in which the honeycomb material is adjacent to the fiber reinforced resin. As shown in Figure 9, in order to further reduce the thickness of the second foundry core 18d, the angle between the two pieces of fiber reinforced resins molded by the molding tool 10a can be changed to the angle between the two-layer fiber reinforced resins of the composite material.

Thus, with the second foundry core 18d having the dimension smaller than that of the honeycomb material 23a, the energy required for the molding of the fiber reinforced resin in the molding tool 10a can be reduced, the control of the temperature inside the molding tool 10a, which is implemented in the curing step 120 and the like, can be easily performed, and furthermore, it becomes easy to handle the second foundry core 18b. If the dimension of the second foundry core 18d is different from that of the honeycomb material 23a, the molding tool 10a used in the series of steps 100 to 130 for molding the fiber reinforced resin and the molding tool 10b used in the combination step 150 are different from each other in terms of the heights of frame molds 13a and 13b and the shapes of first foundry cores 18c and 18g. The widths of the upper mold 11 and the lower mold 12 are different from each other in this case. However, the widths of the upper mold I 1 and the lower mold 12 can be configured to be the same as each other by arranging a fourth core provided adjacently to the frame molds 13a and 13b in the molding tools 10a and 10b and by adjusting the dimension of the fourth core.

In the embodiments shown in Figures 1 to 8, a foundry core having a surface for molding the composite material, i.e., the first foundry core 18a, is provided to the upper mold 11 only; however, of course, the lower mold 12 may also be provided with a foundry core having a surface for molding the composite material, i.e., a third core 18e, as shown in Figures 9 and 10. In addition, if the angle between the two pieces of fiber reinforced resins molded in the molding tool 10a is different from the angle for the composite material, one fiber reinforced resin becomes shorter than the other in the molding tool 10a as illustrated in Figure 9. Accordingly, a fourth core 18f may be provided adjacently to the frame mold 13 in order to mold the shorter fiber reinforced resin into a predetermined shape.

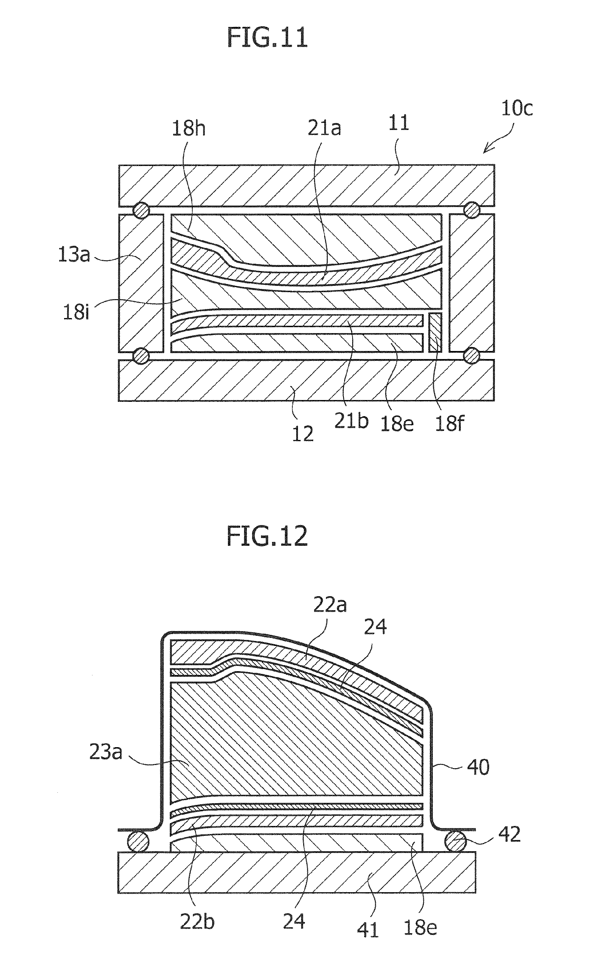

Furthermore, in each embodiment illustrated in Figures 1 to 8 and Figures 9 and 10, in producing a composite material including a core layer of a honeycomb material sandwiched by two-layered fiber reinforced resins, the second foundry cores 18b and 18d only, which are located between the fiber reinforced resins, have the shape substantially the same as the shape of the part in which the honeycomb material is adjacent to the fiber reinforced resin in the molding tools 10 and 10a. However, the present invention is not limited to this. For example, referring to Figure 11, which illustrates a modification of the example illustrated in Figure 9, a molding tool 10c may be configured so that the molding shape for one fiber reinforced resin is configured to be upside down from that of the above-described example and that a first foundry core 18h, which is provided adjacently to the upper mold 11, has a shape substantially the same as the shape of the part in which the honeycomb material 23a is adjacent to the fiber reinforced resin 22a. In this case, a second foundry core 18i, which is sandwiched between two pieces of fiber reinforced resins to be molded, has a shape substantially the same as the shape of a part in which the honeycomb material 23a is adjacent to the other fiber reinforced resin 22b and also has a surface for molding the composite material.

Furthermore, in the embodiments described above, in steps 140 to 160, a composite material is produced by combining the honeycomb material with the fiber reinforced resin by means of the molding tools. However, the present invention is not limited to this. More specifically, referring to Figure 12, which illustrates a modification of the example shown in Figure 10, a composite material in which the honeycomb material 23a and the fiber reinforced resins 22a and 22b are integrated together can be produced also by arranging the honeycomb material 23a and the fiber reinforced resins 22a and 22b at predetermined locations, enclosing the same into a bag 40 constituted by a material such as a sheet material or a film material, and heating the bag by means of an oven, an autoclave, or the like (not shown). The fiber reinforced resins 22a, 22b to be enclosed in the bag 40 is molded by the molding tools by using the foundry core having a shape substantially the same as the shape of a part in which the honeycomb material 23a is adjacent to the fiber reinforced resins. Accordingly, a composite material having a predetermined shape can be obtained without using a molding tool in the combination of the fiber reinforced resins 22a, 22b with the honeycomb material 23a. Alternatively, the bag 40 may be hermetically sealed via a lower mold 41 and a sealant 42 as shown in Figure 12. Further alternatively, a foundry core having a surface for molding a composite material used in the molding tool, i.e., the third core 18e in this example, may be arranged in the lower mold 41 where necessary. Yet further alternatively, the third core 18e and the lower mold 41 may be integrally provided where necessary. If the combination is implemented by using the bag like this, a composite material including the honeycomb material and the hollow or solid members can be obtained similarly to the case in which the combination is implemented by using the molding tools. Furthermore, the present invention is not limited to the case in which the shape of the entire core is the same as the shape of the entire honeycomb material. More specifically, the foundry core may include a part having a shape that is the same as that of the part in which the honeycomb material is adjacent to the fiber reinforced resin.

In addition, as the configuration of the foundry core 18 included in the molding tool 10, a heating function can be imparted by providing the foundry core with a heater or the like (not shown). Thus, the heating of the molding tools in the drying step 104 and the heating of the resin material in the curing step 120 can be promoted. In addition, by providing the foundry core with a water-cooling element, a Peltier element, or the like, for example, a cooling function can be imparted. Thus, the cooling of the molding tools in the cooling step 122 can be promoted.

The foundry core 18 of the molding tool 10 may be a foundry core which takes a shape substantially the same as the shape of the lightweight core by expansion or contraction caused due to heating, etc. in the process between the arrangement step 110 and the curing step 120. Such an expansion function and a contraction function can be imparted by forming the foundry core by using a metal with a high coefficient of linear expansion such as aluminum, a rubber with a high coefficient of linear expansion, a silicone bag, etc., for example. In addition, the foundry core 18 of the molding tool 10 may be a foundry core that takes a shape substantially the same as the shape of the lightweight core when a part of the foundry core is melted. For the material of the part to be melted, a water soluble resin, a wax packed with a film, and the like can be used, for example.

### REFERENCE SIGNS LIST

10: Molding tool
11: Upper mold
12: Lower mold
13: Frame mold
14: Cavity
15: Resin injection piping
16: Vacuum piping
17: Sealer
18: Core
20: Composite material
21: Fiber base material
22: Fiber reinforced resin
23: Honeycomb material
24: Adhesive
31: Peel ply
32: Recess
33: Projection
40: Bag
41: Molding tool
42: Sealant

## Claims

1. A method for producing a composite material including a lightweight core and a fiber reinforced resin that is adjacent to at least a part of a surface of the lightweight core, the method comprising the steps of:
arranging a foundry core and a fiber base material adjacently to the foundry core in an inside of a molding tool, the foundry core including a part which has a shape substantially the same as a shape of a part of the lightweight core which is adjacent to the fiber reinforced resin;
impregnating the fiber base material with a resin material by injecting the resin material into the molding tool;
curing the resin material;
separating a cured resin including the fiber base material molded by the molding tool from the foundry core; and
forming the composite material by combining the lightweight core with the cured resin including the fiber base material.

2. The method according to claim 1, wherein a chain-curing resin composition is used for the resin material.

3. The method according to claim 2, wherein in the curing step, the resin material is cured to reach a handleable state by inducing a chain cure reaction of the chain-curing resin composition.

4. The method according to any one of claims 1 to 3, wherein in the curing step, the resin material is cured by at least one of heat and ultraviolet rays.

5. The method according to any one of claims 1 to 4, wherein the molding tool is a nonadiabatic molding tool.

6. The method according to any one of claims 1 to 5, wherein the composite material forming step comprises arranging an adhesive between the lightweight core and the cured resin including the fiber base material.

7. The method according to any one of claims 1 to 6, wherein the composite material forming step comprises combining the lightweight core with the cured resin including the fiber base material at a location which the part of the foundry core having substantially the same shape as the lightweight core was positioned when the foundry core was arranged.

8. The method according to any one of claims 1 to 7, wherein the composite material forming step includes arranging the lightweight core and the cured resin including the fiber base material inside the molding tool to combine them with each other.

9. The method according to any one of claims 1 to 7, wherein the composite material forming step includes enclosing the lightweight core and the cured resin including the fiber base material in a bag and heating the resulting bag to combine them with each other.

10. The method according to any one of claims 1 to 9, wherein in the composite material forming step, the combination is carried out by heating until at least a glass transition temperature of the cured resin including the fiber base material.

11. A device for producing a composite material including a lightweight core and a fiber reinforced resin that is adjacent to at least a part of a surface of the lightweight core, the device comprising:
a molding tool configured to form the fiber reinforced resin by injecting a resin material in a cavity thereof in which a fiber base material is arranged and by curing the resin material after the fiber base material is impregnated with the resin material, and
a foundry core including a part that has a shape substantially the same as a shape of a part of the lightweight core which is adjacent to the fiber reinforced resin.

12. The device according to claim 11, wherein the foundry core is arranged inside the molding tool so that the part of the foundry core having substantially the same shape as the lightweight core is positioned at a location of the lightweight core included in the composite material.

13. A composite material comprising:
a lightweight core; and
a fiber reinforced resin which is adjacent to at least a part of a surface of the lightweight core,
wherein the fiber reinforced resin is a cured resin including a fiber base material obtained by arranging a foundry core and a fiber base material adjacently to the foundry core in an inside of a molding tool, the foundry core including a part which has a shape substantially the same as a shape of a part of the lightweight core which is adjacent to the fiber reinforced resin; injecting a resin material into the molding tool to impregnate the fiber base material with the resin material; curing the resin material; and separating the cured resin including the fiber base material from the foundry core,
wherein the composite material is obtained by combining the lightweight core with the cured resin including the fiber base material.

14. The composite material according to claim 13, wherein the resin material is a chain-curing resin composition.
